# EUROPEAN PATENT APPLICATION

(11) **EP 1 442 917 A2**
(43) Date of publication of application: **04.08.2004**
(21) Application number: 03257592.0
(22) Date of filing: 03.12.2003
(51) Int. Cl.: B60K 31/00

(54) **Adaptive cruise control systems**

(30) Priority: 16.01.2003 GB 0300975
(71) Applicant: Ford Global Technologies, LLC, Dearborn, Michigan 48126-2490 (US)
(72) Inventor: Dunoyer, Alain, Coventry CV5 8NY (GB); Leatherland, Adam Keith, Coventry CV4 9HD (GB)
(74) Representative: Potts, Susan Patricia

(57) **Abstract**

An adaptive cruise control device (1) provides a mechanism for re-engaging adaptive cruise control after a vehicle has been brought to a halt automatically. A "blip" on the throttle pedal when the driver wants to proceed is detected by a throttle position sensor (3) and in response, the device (1) instructs the adaptive cruise control system to re-engage. A safety feature inhibits re-engagement if the gap between the vehicle and one in front is below a preset range.

## Description

Conventional cruise control systems fulfil the function of speed control of a vehicle. A desired speed is set by the driver and a control system operates on the engine (usually the throttle only) to maintain the desired speed. When the traffic is light, this simple speed control is acceptable to the driver, however if the traffic is heavy the driver is faced with constantly adjusting the set speed in order to maintain a safe distance from the preceding traffic and may have to disengage the cruise control in order to brake.

Many systems have now been developed by the addition of a distance sensor to the conventional cruise control system which adds distance keeping to the basic speed control function. Many such systems also include means to monitor the relative velocities of the vehicle which is equipped with the cruise control system and a preceding vehicle. Moreover the engine control also often includes a limited authority braking system, so that the speed control / distance keeping can be effected by a combination of the throttle and the brake.

Such a system may operate as an adaptive cruise control system which, when activated, enables the vehicle in question (host vehicle) to reduce speed automatically when a preceding target vehicle is detected in its path. The host vehicle will then follow, no closer than a minimum set time gap (equivalent to a minimum set distance), the closest preceding target vehicle that is "in path". This will continue until the closest preceding target vehicle is detected to move out of the path of the host vehicle at which point the original desired set speed is resumed. An example of this type of system is disclosed in US 5,910,565.

Dynamically the adaptive cruise control vehicle can be in one of two states, either "cruise" acting like conventional cruise control and controlling the vehicle to a desired driver set speed, or it is in "follow" mode where the speed of the vehicle is reduced below the set speed because a preceding target vehicle is within a set range.

A further refinement is the provision of a stop / go facility whereby the host vehicle may be brought to a standstill, behind a queue of vehicles for example. See for example US 6, 233, 515.

Current adaptive cruise control systems can be overridden whilst the vehicle is progressing in either or cruise or follow mode, by the driver pressing the throttle pedal. Once the vehicle has been brought to a halt automatically under the control of the adaptive cruise control system, pressing the throttle pedal to start off again will override the system. Thus there is a need for a mechanism for allowing the driver to re-engage adaptive cruise control after the vehicle has been automatically brought to a halt.

According to a first aspect of the present invention an adaptive cruise control device for a vehicle includes means for re-engaging an automatic cruise control function after the vehicle has been brought to a halt, said means for re-engaging being adapted to respond to a momentary press and release of the vehicle's throttle pedal.

According to a second aspect of the present invention a method for re-engaging an adaptive cruise control function in a vehicle after the vehicle has been brought to a halt includes the steps of; detecting a momentary press and release of the vehicle's throttle pedal and re-engaging the adaptive cruise control function in response thereto.

The present invention also provides a vehicle equipped with an adaptive cruise control device in accordance with said first aspect.

In a preferred embodiment, the means for re-engaging is further adapted to be responsive to the output of a distance sensor for measuring the distance between said vehicle and a preceding vehicle.

The distance sensor may comprise a radar, infra red, ultra sonic sensor or the like and be mounted on the vehicle. The re-engagement may be inhibited if the preceding vehicle is deemed to be within a certain range, thus providing an additional safety feature.

If the preceding vehicle is detected to be within a range threshold, the driver may be alerted by the provision of a warning device. Such a device may be configured to produce an audible warning or to illuminate a warning light for example.

In a further embodiment, the means for re-engaging is further responsive to an input from a manually-operated switch which allows the driver to reactivate the adaptive cruise control function.

Some embodiments of the invention will now be described, by way of example only, with reference to the drawings of which;
Figure 1 is a block diagram showing an adaptive cruise control device in accordance with an embodiment of the invention and its incorporation with conventional vehicle systems, and
Figure 2 is a flow chart illustrating the operation of preferred embodiments of the invention.

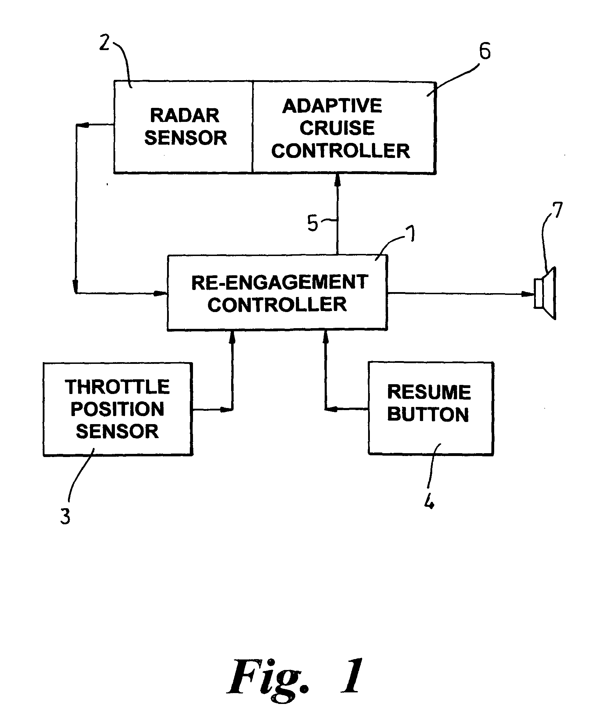

In Figure 1, a re-engagement controller 1 receives inputs from a radar sensor 2, a throttle position sensor 3 and a resume button 4. A first output 5 of the re-engagement controller 1 is fed to an adaptive cruise controller 6 and a second output to an audible warning device 7. The radar sensor 2 and throttle position sensor 3 are conventional devices and the radar sensor 2 may form a part of the vehicle's conventional adaptive cruise controller as may the adaptive cruise controller 6. All the modules illustrated are mounted within a vehicle (not shown) and the resume button 4 is driver-operated.

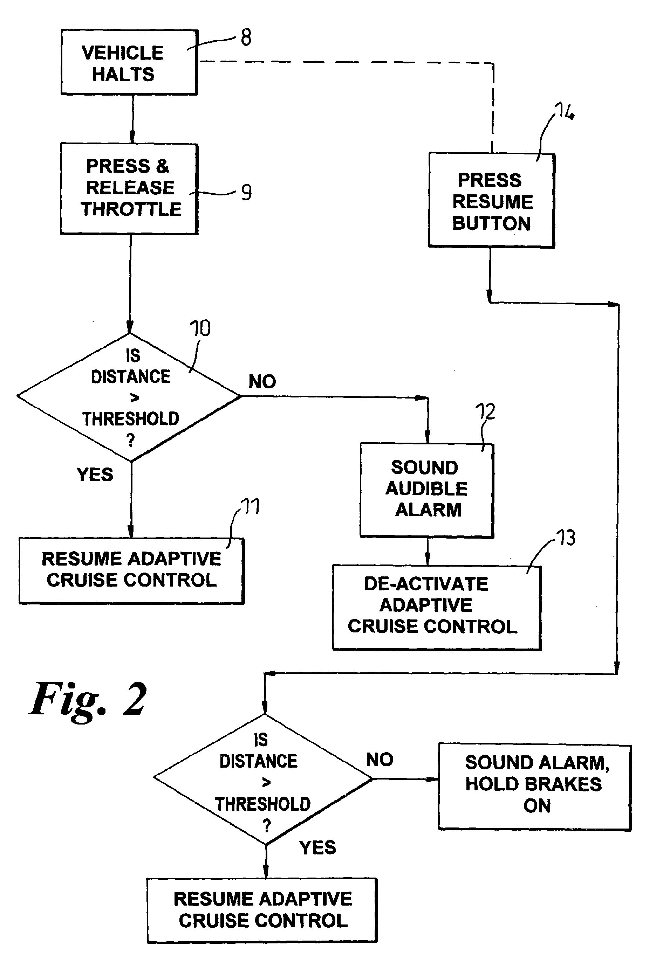

With reference also to figure 2, at step 8 the vehicle is automatically brought to a halt by the adaptive cruise controller 6. When the driver wishes to set off again and re-engage adaptive cruise control he / she briefly presses the throttle pedal to signal to the re-engagement controller 1 that he / she wishes to proceed (step 9). This action is detected by the re-engagement controller 1 via its input from the throttle position sensor 3. However, before the re-engagement controller 1 sends a resume signal to the adaptive cruise controller 6, it firsts interrogates the radar sensor 2 to ascertain whether the distance between the vehicle and any other vehicle that may be in front is greater than a pre-set (safe) threshold of typically 3 metres (step 10). If the measured distance is greater than the threshold, then the re-engagement controller 1 instructs the adaptive cruise controller 6 to resume adaptive cruise control operation (step 11). The vehicle then accelerates to either a follow speed or set speed at appropriate. If, on the other hand, the separation between the vehicle and one in front is equal to less than the threshold, then an audible warning is sounded (step 12) and the re-engagement controller 1 does not send an instruction to the adaptive cruise controller 6 to resume operation. Instead, the adaptive cruise control operation is deactivated on instruction from the re-engagement controller 1 to the adaptive cruise controller 6 (step 13).

In a further embodiment, the driver has the additional option of pressing the resume button 4 (step14) to re-engage the adaptive cruise control operation. Once again, the method is configured to resume adaptive cruise control operation when the distance from the vehicle and any preceding vehicle exceeds the preset threshold. If however, the distance between the vehicle and another vehicle infront is equal to or less than the safe threshold, then the adaptive cruise controller 6 holds the vehicle's brakes on and the audible alarm is sounded. The vehicle can now only be caused to move off again by the driver overriding the system, e.g. by depressing the throttle pedal.

## Claims

1. An adaptive cruise control device for a vehicle **characterised in that** the device includes means (1) for re-engaging an adaptive cruise control function after the vehicle has been brought to a halt, said means for re-engaging being adapted to respond to a momentary press and release of the vehicle's throttle pedal.

2. An adaptive cruise control device for a vehicle as claimed in claim 1 in which said means (1) for re-engaging is further adapted to be responsive to the output of a distance sensor (2) for measuring the distance between said vehicle and a preceding vehicle.

3. An adaptive cruise control device for a vehicle as claimed in claim 2 and further including a warning device (7) for alerting the driver of said vehicle of the proximity of the preceding vehicle.

4. An adaptive cruise control system as claimed in any preceding claim in which the means (1) for re-engaging is responsive to an input from a manually operated switch (4).

5. A vehicle including the adaptive cruise control device of any preceding claim.

6. A method for re-engaging an adaptive cruise control function in a vehicle after the vehicle has been brought to a halt, **characterised in that** the method includes the steps of; detecting a momentary press and release of the vehicle's throttle pedal and re-engaging the adaptive cruise control function in response thereto.

7. A method for re-engaging an adaptive cruise control function as claimed in claim 6 including the further step of monitoring the distance between the vehicle and a preceding vehicle and re-engaging the adaptive cruise control function only if the distance exceeds a preset threshold.

8. A method for re-engaging an adaptive cruise control function as claimed in claim 7 including the further step of issuing a warning to the driver of the vehicle if the distance is equal to or less than the pre-set threshold.
